# EUROPÄISCHE PATENTSCHRIFT

(11) **EP 1 257 404 B1**
(45) Veröffentlichungstag und Bekanntmachung des Hinweises auf die Patenterteilung: **03.11.2004**
(21) Anmeldenummer: 01903708.4
(22) Anmeldetag: 07.02.2001
(51) Int. Cl.: B29C 47/02, B29C 47/90

(54) **VERFAHREN UND ANLAGE ZUR INNENBESCHICHTUNG EINES ROHRFÖRMIGEN AUSSENKÖRPERS**
METHOD AND DEVICE FOR COATING THE INSIDE OF A TUBULAR OUTER BODY
PROCEDE ET DISPOSITIF PERMETTANT D'APPLIQUER UN REVETEMENT INTERIEUR SUR UN CORPS TUBULAIRE EXTERNE

(30) Priorität: 09.02.2000 DE 10005943
(43) Veröffentlichungstag der Anmeldung: 20.11.2002
(73) Patentinhaber: Mekuma Mecklenburgische Kunststoffmaschinen GmbH, 19217 Bülow (DE)
(72) Erfinder: Zahren, Herman, 19217 Bülow (DE)
(74) Vertreter: Müller-Gerbes, Margot, Dipl.-Ing.
(86) Internationale Anmeldenummer: PCT/EP2001/001291
(87) Internationale Veröffentlichungsnummer: WO 2001/058664

(56) Entgegenhaltungen:
- DE-A- 3 525 530
- US-A- 3 376 180
- US-A- 4 465 449
- US-A- 4 501 629
- US-A- 4 738 735

## Beschreibung

Die Erfindung betrifft ein Verfahren zum kontinuierlichen Herstellen eines endlosen rohrförmigen steifen oder flexiblen Außenkörpers und Herstellen einer Innenbeschichtung des Außenkörpers mit einer Beschichtungsmasse aus schmelzbaren natürlichen und/oder künstlichen Rohstoffen in geschmolzenem Zustand gleichzeitig oder mit geringem zeitlichem Nachlauf zu dem im gleichen Arbeitsgang hergestellten Außenkörper, wobei die aufgeschmolzene Beschichtungsmasse unter Druck über einen ringförmigen Austrittsspalt auf die innenwandung des kontinuierlich an dem ringförmigen stationären Austrittsspalt vorbei geförderten Außenkörpers aufgetragen wird und in einem sich anschließenden axial erstreckenden Ringspalt zu der Innenbeschichtung gewünschter Schichtdicke ausgebildet wird.
Die Erfindung betrifft des weiteren eine Anlage zum kontinuierlichen Herstellen eines endlosen rohrförmigen steifen oder flexiblen Außenkörpers mit einer Innenbeschichtung aus einer Beschichtungsmasse aus schmelzbaren natürlichen und/oder künstlichen Rohstoffen in geschmolzenem Zustand mit einer stationären Vorrichtung zum Herstellen des Außenkörpers, der eine stationäre Austragsvorrichtung für die geschmolzene Beschichtungsmasse zugeordnet ist, wobei der Austragsvorrichtung ein Formwerkzeug mit einem zwischen einem Innendorn mit Pilzkopf und einem dieses umgebenden mehrteiligen Formgehäuse ausgebildeten, im Querschnitt betrachtet ringförmigen Fließkanal nachgeordnet ist, wobei das Formwerkzeug zumindest teilweise in das stirnseitig offene Ende des kontinuierlich gefertigten und geförderten Außenkörpers am Entstehungsort eintaucht und der Fließkanal mit einem ringförmigen Austrittsspalt in einen zwischen der Außenwandung des Pilzkopfes des Innendorns und der Innenwandung des Außenkörpers gebildeten sich axial erstreckenden Ringspalt mündet.

Eine gattungsgemäße Vorrichtung und Verfahren ist aus der US-A-4738735 bekannt.

Des weiteren ist aus der US-A-3376180 ein Verfahren mit Vorrichtung bekannt, bei dem ein Außenkörper kontinuierlich gewickelt und der gewickelte Außenkörper kontinuierlich innen mit einem extrudierten thermoplastischen Kunststoffschlauch beschichtet wird, wobei sowohl der gewickelte Außenkörper als auch der Kunststoffschlauch gemeinsam rotieren. Der extrudierte Kunststoffschlauch wird durch Aufblasen mit Blasluft an die Innenwandung des Außenkörpers gedrückt und durch einen linienförmigen von einem Dornkopf oder Rollenkranz gebildeten Spalt gezogen. Hiermit ist weder eine maßgenaue noch konzentrische oder gleichmäßige Beschichtung erzielbar.

Aus der DE 33 40 003 A1 ist bereits eine Einrichtung zum Innenbeschichten eines Hohlelementes mit Schmelzkleber bekannt, bei der das von einem Extruder kommende Hohlelement in seinem bereits erhärteten Teil außenseitig erfasst und um seine Längsachse gedreht und mittels Überdruck aufgeweitet wird und in das Hohlelement Schmelzkleber in flüssiger Form eingebracht wird, welcher sich durch die Rotation des Hohlelementes gleichmäßig über die Innenwandung desselben verteilen soll. Eine definierte Innenbeschichtung ist hierdurch nicht erhältlich.

Aus der DE-A-35 25 530 hingegen ist die Coextrusion zweier Schläuche aus thermoplastischem Kunststoff mittels konzentrischer Düsen bekannt, wobei für die Innenbeschichtung als Düse ein Lochring mit einzelnen Durchtrittsöffnungen vorgesehen ist. Auch mit dieser Vorrichtung ist eine maßhaltige gleichmäßige Schichtdicke und Schichtdickenverteilung bei sich ändernden Extrusionsbedingungen und Viskositätsschwankungen der Schmelzen nicht erreichbar.

Diskontinuierliche Verfahren zum Innenbeschichten von einzelnen steifen Rohrstücken, bei denen das zu beschichtende Rohrstück stationär gehalten wird, sind z.B. aus der DE 22 49 256 A1, DE 39 12 933 A1 oder DE 19 39 532 U1 bekannt.

Aufgabe der Erfindung ist es, gegenüber den heute bestehenden Systemen zur Innenbeschichtung von festen rohrförmigen, insbesondere auch flexiblen Körpern oder Schläuchen eine Auftragung der Innenbeschichtung zu erreichen, die genauer in der Wandstärke ist, die aber auch eine Innenbeschichtung ab größeren Durchmessern bei insbesondere flexiblen Außenkörpern ermöglicht. Es soll eine maßhaltige definierte Innenbeschichtung sowohl für steife oder flexible rohrförmige Außenkörper in endloser Ausführung, und mittels einer kontinuierlichen Herstellung geschaffen werden.

Erfindungsgemäß wird diese Aufgabe durch ein Verfahren zum kontinuierlichen Herstellen eines endlosen Außenkörpers und seiner Innenbeschichtung der gattungsgemäßen Art dadurch gelöst, dass die Beschichtungsmasse mit einem Druck von mindestens 30 bar gefördert wird und unter Ausübung eines einstellbaren radialen Druckes auf die Innenwandung des Außenkörpers aufgebracht wird und die aus dem ringförmigen Austrittsspalt austretende Menge der Beschichtungsmasse durch Verändern der Spaltweite des ringförmigen Austrittsspaltes geregelt wird und die Schichtverteilung im Ringspalt zum Erreichen einer konzentrischen Innenbeschichtung mit möglichst gleichmäßiger Wanddicke über den Querschnitt betrachtet eingestellt wird.

Gemäß dem Vorschlag der Erfindung wird die Aufgabe einer regelbaren Innenbeschichtung für rohrförmige Außenkörper mit einer gattungsgemäßen Anlage gelöst, bei der der Innendorn axial und radial verstellbar ist.

Vorteilhafte Ausgestaltungen der Erfindung sind den kennzeichnenden Merkmalen der Unteransprüche sowie der nachfolgenden Beschreibung entnehmbar.

Erfindungsgemäß hat sich herausgestellt, dass es von Vorteil ist, wenn der Vorgang der Aufschmelzung bzw. Verflüssigung der Beschichtungsmasse unter Druck und Temperatur von dem Vorgang der Innenbeschichtung getrennt wird. Bei der Erfindung wird daher die Erzeugung einer homogenen Schmelze an marktgängige Systeme übertragen, die für solche Verfahren geeignet sind. Erfindungsgemäß werden hierfür Extruder oder Aufschmelzaggregate in Verbindung mit Zahnradpumpen, Spinnpumpen eingesetzt. Das Austragssystem, beispielhaft als Extruder oder als Spinnpumpe ausgelegt, befüllt sich über Schwerkraftdruck oder über Hilfssysteme mit der Schmelze. Über die gewählte Antriebsart des Extruders oder der Spinnpumpe erfolgt eine genau dosierbare definierte Ausgabemenge in das Formwerkzeug. Die Mengenausgabe einer Spinnpumpe ist z.B. pro Pumpenumdrehung von den einschlägigen verfügbaren Spinnpumpensystemen exakt definiert, somit kann über eine Drehzahlveränderung der Spinnpumpe die eingespeiste Menge exakt vorbestimmt werden.

Der direkte Bezug zwischen z.B. Drehzahl der Schmelzepumpe oder Extruderdaten und in das Formwerkzeug eingetragenen Mengen erlaubt es, z.B. über eine manuelle Vorgabe, wie aber auch über einen Soll-Wert am Austrittsspalt exakt die Schmelzemenge bereitzustellen, die der gegenwärtigen Beschichtungsgeschwindigkeit entspricht. Diese Beschichtungsgeschwindigkeit kann z.B. bestimmt sein durch die Abzugsgeschwindigkeit des rohrförmigen Außenkörpers oder die Geschwindigkeit der parallelen Herstellung des innen zu beschichtenden rohrförmigen festen oder flexiblen Außenkörpers, aber auch bestimmt sein durch Vorgänge und Abläufe wie Vorwärmung oder Abkühlung oder durch mehrere Parameter gleichzeitig. Insbesondere ist es erfindungsgemäß möglich, die Beschichtungsgeschwindigkeit und damit die Austragsmenge und die Dicke der herzustellenden Innenbeschichtung angepasst an die axiale Fördergeschwindigkeit des Außenkörpers bzw. dessen Herstellungsgeschwindigkeit anzupassen.

Es kann immer wieder vorkommen, dass aufgrund von Störungen, aber auch gewollten Unterbrechungen bei der kontinuierlichen Herstellung des Außenkörpers wie aber auch der Innenbeschichtung die Anlage heruntergefahren werden muss oder im Sinne eines Schnell-Stops angehalten werden muss. Es ist bekannt, dass über einen Druckaufbau, wie er z.B. auf einen Extruder aufgebracht wird, bei einem Anhalten des Extruders der aufgebaute Druck sich über ein Nachdrücken der Masse aus der Schnecke bis in den Werkzeugaustrittsspalt fortsetzt. Dieses Problem wird erfindungsgemäß dadurch gelöst, dass die aus dem ringförmigen Austragsbereich des Formwerkzeuges austretende Menge der Beschichtungsmasse regelbar ist. Dies ist gemäß einem weiteren Vorschlag der Erfindung dadurch ermöglicht, dass die Spaltweite des ringförmigen Austrittsbereiches des Formwerkzeuges selbsttätig über einen Soll-Ist-Vergleich der vorgegebenen Schichtdicke der Innenbeschichtung eingestellt wird. Erfindungsgemäß wird hierzu beispielsweise der den Fließkanal und dessen Austrittsbereich begrenzende Innendorn des Formwerkzeuges axial verstellbar ausgebildet. Das störende Massenachdrücken bei häufigen Stops wird somit gemäß der Erfindung über die Bewegung des Innendorns zum Verändern und Verschließen des Austrittsspaltes für die Beschichtungsmasse am Beschichtungspunkt ausgeschlossen. Das vorgeschlagene Fördersystem trennt die Schmelzeerzeugung für die Beschichtung von dem Schmelzeeintrag, so dass eine geringere Restmenge aus dem Formwerkzeug nicht nachdrücken kann und somit der Vorgang des Ab- und Anfahrens verkürzt wird und Material eingespart und Ausschuss verringert bzw. vermieden wird.

Diese Regelung über die Bewegung des Innendornes schließt einen Verschluss des Austrittsspaltes in Falle eines Not-Stops ein. Diese Regulierung bzw. Unterbrechung wird dadurch erreicht, dass der Innendorn in der axialen Richtung manuell oder mit Hilfe einer Bewegungsvorrichtung verschoben werden kann. In oberer Stellung ist beispielhaft der Austrittsspalt völlig geschlossen, in der untersten ausgefahrenen Stellung auf maximale Weite geöffnet. Neben der Möglichkeit des gänzlichen Verschlusses bei Not-Stops kann nun über eine Verbindung einer Wanddickenmessung der innen am Außenkörper haftend aufgetragenen Innenbeschichtung mit der axialen Verschiebeeinheit die Auftragsdicke der Innenbeschichtung kontrolliert und reguliert werden, d.h. bei einer über den Soll-Wert zuwachsenden Schichtdicke wird der Spalt verkleinert, die Austragsmenge verringert sich und die Schichtdicke der aufgetragenen Innenbeschichtung kehrt in den vorgegebenen Soll-Bereich zurück. Wesentlich hierfür ist auch, dass die aufgebrachte Innenbeschichtung innen kalibriert wird und eine entsprechende Kalibriereinrichtung in Front des Formwerkzeuges unmittelbar anschließend an den Innendorn vorgegeben ist.

Für die Haftung der Innenbeschichtung auf dem rohrförmigen festen oder flexiblen Außenkörper, der in axialer Richtung an dem schmelzeführenden ringförmige Austrittsspalt des Formwerkzeuges vorbei bewegt wird, ist neben der Vorwärmung und exakten Führung des Außenkörpers von besonderer Bedeutung, dass in der Zone des Haftungsüberganges die aufgetragene Innenbeschichtung mit Druck auf den innen zu beschichtenden Außenkörper wirkt, um eine gute Haftung zu erreichen. Bestehende Systeme haben den Nachteil, dass diese Druckeinwirkung eine feststehende Größe ist oder nicht vorhanden ist und nicht veränderlich im Sinne einer dimensions- oder prozessbezogenen Einstellbarkeit. Erfindungsgemäß wird ein einstellbarer radialer Druck erzeugt, unter dem die Beschichtungsmasse auf die Innenwandung des Außenkörpers aufgebracht wird. Ein solcher radial einstellbarer Druck ist im Sinne einer prozessbedingten Anpassung z.B. an Viskositätsunterschiede der innen aufzutragenden Schmelze, oder aufgrund von Unterschieden in der Oberfläche des innen zu beschichtenden rohrförmigen Außenkörpers eine der wesentlichen Voraussetzungen für die Herstellung innen beschichteter Außenkörper größerer Abmessungen. Durch die Spaltweitenregulierung des axialen Ringspaltes zwischen dem Außendurchmesser des den axialen Ringspalt innen begrenzenden Innendornes bzw. der nachfolgenden sich unmittelbar anschließenden Kalibriervorrichtung und dem Innendurchmesser des rohrförmigen Außenkörpers wird auf die sich im Ringspalt befindende Innenbeschichtung ein einstellbarer radialer Druck aufgebracht. Dies erfolgt durch die Druckerzeugung aus der vorstehend beschriebenen Förderpumpe bzw. Extruder und der regulierbaren Spaltweite im Strömungsbereich der Schmelze innerhalb des Formwerkzeuges, wodurch abhängig von der Viskosität bzw. Fließfähigkeit der Schmelze in diesem Bereich die Schmelze in die Innenwandung des Außenkörpers unter einstellbarem Druck eingepresst bzw. fixiert wird. Erfindungsgemäß wird mittels geeigneter innen- und Außenkühlung der aufgebrachten Beschichtungsmasse nach dem Durchlaufen des Ringspaltes so viel Wärme entzogen, dass eine Verfestigung und Haftung der Innenbeschichtung am Außenkörper eintritt.

Über die axiale Förderbewegung des rohrförmigen Außenkörpers wird der nunmehr mit einer Innenbeschichtung versehene rohrförmige Außenkörper kontinuierlich weiterbewegt. Somit ist es möglich, beliebige Längen von innen beschichteten Außenkörpern in einem kontinuierlichen Verfahren endlos herzustellen.

Eine abschließende Stabilisierung im gesamten Beschichtungsquerschnitt erfolgt erfindungsgemäß über eine intensive Kühlung der aufgetragenen Innenbeschichtung wie auch des so innen beschichteten Außenkörpers, vorzugsweise von innen mittels Kühlluft ggf. zusätzlich von außen. Hierbei ist diese Kühlung ebenfalls regelbar.

Die Erfindung ermöglicht auch im Falle einer kurzfristigen Produktionsunterbrechung, welche die Gefahr einer Abkühlung und damit eines Schrumpfens des rohrförmigen Außenkörpers mit oder ohne Innenbeschichtung zur Folge hat, zu verhindern, dass sich der rohrförmige Außenkörper festschrumpft. Dies wird dadurch erreicht, dass im Falle des Not-Stops der Produktion oder anderer Unterbrechungen der Kalibrierdurchmesser der sich an den Ringspalt zur Ausbildung der Innenbeschichtung anschließenden Kalibriereinrichtung für die innenbeschichtung manuell oder programmgesteuert zurückgezogen wird.

Wesentliche Merkmale der Erfindung sind unter anderem:
- Austragsvorrichtung für natürliche und künstliche Stoffe die durch Erwärmung fließfähig werden und über die Austragsvorrichtung hochgenau in ein Formwerkzeug zur Innenbeschichtung dosiert werden können.
- Austragsvorrichtung, die bauartbedingt in der Austragsmenge sehr genau reguliert werden kann und z.B. auch im Falle eines Not-Stops nur unerhebliche Materialmenge nachfließen lässt.
- Formwerkzeug zur Innenbeschichtung eines rohrförmigen Außenkörpers mit einem axial verstellbaren Innendorn der zur Regulierung der Austrittsmenge wie auch zum vollständigen Austrittsverschluss eingesetzt werden kann.
- Formwerkzeug zur Innenbeschichtung, dessen ringförmiger Austrittsbereich radial verstellbar ist.
- Automatisiertes Verfahren, in dem die Spaltweitenregulierung selbsttätig erfolgt über einen Soll-Ist-Vergleich der vorgegebenen Schichtdicke.
- Kalibriervorrichtung für die Innenbeschichtung die im Durchmesser im Stillstand wie aber auch während der laufenden Produktion einstellbar ist und damit die Schichtdicke der Innenbeschichtung maßhaltig fertig stellt.
- . Automatisiertes Verfahren, in dem die Schichtdickenregulierung selbsttätig erfolgt über einen Soll-Ist-Vergleich der vorgegebenen Schichtdicke für die innenbeschichtung.
- Manuelles oder automatisiertes Verfahren, welches die Innenkalibrierung der Innenbeschichtung im Falle eins Not-Stops soweit im Durchmesser verringert, dass sich der abkühlende und dadurch schrumpfende rohrförmige Außenkörper mit und ohne Innenbeschichtung nicht auf dem Werkzeug festsetzen kann und damit durch die notwendigen Lösearbeiten den Produktionsprozess nachhaltig unterbricht.

Das erfindungsgemäße Verfahren und die Anlage können zum Herstellen von rohrförmigen Außenkörpern mit einer Innenbeschichtung sowohl für steife Außenkörper als auch für flexible Außenkörper angewendet werden. Hierbei ist die Beschichtung von steifen Außenkörpern insofern weniger problematisch vom Grunde her, da der steife Außenkörper beim Aufbringen der Innenbeschichtung ein definiertes Gegenlager bildet. Bei der Innenbeschichtung von flexiblen Außenkörpern hingegen, beispielsweise Schläuchen aus elastomeren Werkstoffen oder der Innenbeschichtung von gewebten Schläuchen hingegen gibt der Außenkörper beim Aufbringen der Innenbeschichtung nach und bildet kein definiertes Gegenlager. Die Erfindung ermöglicht jedoch, auch flexible Außenkörper, die kontinuierlich hergestellt werden, kontinuierlich innenseitig mit einer Innenbeschichtung definierter maßhaltiger Schichtdicke auszustatten. Dies wird erfindungsgemäß durch Ausbildung der Vorrichtung in der Weise ermöglicht, dass der dem Innendorn insbesondere seinem vorderen Ende benachbarte Formgehäuseteil in Gestalt der Formdüse, der den Fließkanal bis zum ringförmigen Austritt in den axialen Ringspalt begrenzt, an seiner Außenwandung gleichzeitig ein Führungs- und Stützelement bzw. Kalibrierelement zur Innenkalibrierung für den darüber in Förderrichtung gezogenen Außenkörper dient. Der Außenkörper bildet dann nach Verlassen der Formdüse über die er hinweg gezogen wird, zusammen mit dem vorderen Teil des Innendorns, der als Pilzkopf ausgebildet ist, den axialen Ringspalt für die Aufnahme der aus dem ringförmigen Austrittsbereich radial austretenden Beschichtungsmasse zur Ausbildung der Innenbeschichtung. Die Wanddicke der Innenbeschichtung kann hierbei durch die axiale Verstellung des Innendornes reguliert werden, wodurch der ringförmige Austrittsbereich für die Beschichtungsmasse vom Fließkanal der Formdüse in den axialen Ringspalt veränderbar ist und damit die hier durchfließende Menge an Beschichtungsmasse. Ein hoher radialer Beschichtungsdruck im Bereich des Ringspaltes wird auch dadurch erreicht, dass der Querschnitt des Fließkanals der in den axialen Ringspalt mündet, größer als der Querschnitt des aufnehmenden Ringspaltes ist, wodurch der Druck im Ringspalt infolge des Nachdrückens der mit hohem Druck geförderten Schmelze sich aufbaut.

Um eine konzentrische Innenbeschichtung zu erreichen mit möglichst gleichmäßiger Wanddicke über den Querschnitt betrachtet ist erfindungsgemäß vorgesehen, die Formdüse einschließlich Innendorn radial verstellbar zu gestalten.

Ein besonders günstiges Fließverhalten für die Schmelze der Beschichtungsmasse wird durch Ausbildung des Fließkanals in dem Formwerkzeug im axialen Längsschnitt betrachtet mit einer radialen Einschnürung erreicht, und von dieser radialen Einschnürung in Fließrichtung zum vorderen als Pilzkopf ausgebildeten Ende des Dornes hin trichterförmig nach außen verlaufend.

Um eine möglichst gleichmäßige und maßhaltige Innenbeschichtung zu erreichen, ist dem Ringspalt bzw. dem Pilzkopf des Innendorns unmittelbar anschließend eine axial und im Durchmesser verstellbare Kalibriervorrichtung innerhalb des Außenkörpers für die Innenbeschichtung nachgeordnet. Um eine möglichst schnelle und gleichmäßige Verfestigung der Innenbeschichtung und gute Anhaftung derselben auf dem Außenkörper zu erreichen, wird der beschichtete Außenkörper von innen und ggf. zusätzlich von außen unmittelbar nach dem Austreten aus dem axialen Ringspalt und Kalibrieren gekühlt. Für die Kühlung kann beispielsweise Kühlluft durch den Innendorn von außen eingeführt und wieder zurückgeführt werden, wobei die Kühlluft bevorzugt beispielsweise über Luftdüsen austritt, vorzugsweise unter entsprechender Druckbeaufschlagung.

Der Innendorn des Formwerkzeuges weist vorzugsweise eine pilzförmige Gestalt mit einem den Ringspalt begrenzenden Pilzkopf auf, dessen Außenwandung koaxial zur Längsachse des Außenkörpers verläuft. Der Innendorn ist axial verstellbar und des weiteren radial verstellbar, gegebenenfalls zusammen mit dem den anliegenden Fließkanal begrenzenden Teil des Formgehäuses, das heißt der Formdüse. Der Innendorn wird zur Regulierung der Austrittsmenge der Beschichtungsmasse aus dem Austrittsbereich wie auch zum vollständigen Austrittsverschluss der Formdüse eingesetzt. Eine weitere Regulierung ist über die Kalibriervorrichtung erfindungsgemäß vorgesehen, die axial und radial verstellbar ist, das heißt, deren Durchmesser im Stillstand wie auch während der laufenden Produktion einstellbar ist, wodurch die Schichtdicke der aufzutragenden Innenbeschichtung maßhaltig fertigstellbar ist.

Die Schichtdicke der aufzutragenden Innenbeschichtung kann mittels einer Regeleinrichtung selbsttätig über einen Soll-Ist-Vergleich der vorgegebenen Schichtdicke reguliert werden.

Je nach Art des zu beschichtenden Außenkörpers kann dem Formwerkzeug außenseitig entlang des als Innenführung für den Außenkörper dienenden Formgehäuses, insbesondere der Formdüse Heizaggregate zur Erwärmung des Außenkörpers angeordnet werden. Ebenso ist es möglich, im Bereich der Formdüse, indem sie außenseitig als Führung für den Außenkörper dient, innenseitig eine Heizvorrichtung, beispielsweise Heizpatronen vorzusehen. Eine solche Ausstattung des Formwerkzeuges außen und innen mit Heizaggregaten ist dann zweckmäßig, wenn beispielsweise rohrförmige Außenkörper, die aus textilen Fasern gewebt werden, innenseitig beschichtet werden sollen, um diese auf eine bessere Haftung mit der Beschichtungsmasse ermöglichende Temperatur zu erwärmen und auch gegebenenfalls dabei zu trocknen.

Die Erfindung eignet sich insbesondere auch zum Beschichten von flexiblen gewebten Außenkörpern aus textilen und/oder synthetischen Fasern, Fäden, Garnen, wobei die Erfindung ermöglicht, solche gewebten Schläuche auch großer Durchmesser kontinuierlich mittels eines Webkopfes herzustellen und parallel hierzu gleichzeitig innenseitig zu beschichten. Trotz der Flexibilität des Außenkörpers und auch seiner Luftdurchlässigkeit infolge der Webstruktur gelingt es, eine dichte und gleichmäßige Innenbeschichtung maßhaltig kontinuierlich endlos in den gewünschten Längen herzustellen. Derartige flexible mit einer Innenbeschichtung versehene rohrförmige Außenkörper werden beispielsweise zum nachträglichen Auskleiden von Rohrleitungen, Pipelines oder dergleichen insbesondere für Sanierungsfälle benötigt, wobei durch die Flexibilität des beschichteten Außenkörpers Setzungen und Versatz innerhalb der auszukleidenden Rohrleitungen überbrückt werden können. Beispielsweise können Schläuche aus hochfesten Fasern wie Aramidfasern gewebt werden, die durch die anschließende Innenbeschichtung beispielsweise mit einem thermoplastischen Elastomeren, wie TPU gasdicht ausgeführt werden.

Die erfindungsgemäß hergestellten, insbesondere flexiblen Außenkörper mit einer Innenbeschichtung können in vielfältiger Weise auch zur Off-Shore-Verkabelung, für Feuerwehrschläuche und für lose Rohrauskleidungen für den Transport von flüssigen oder gasförmigen Medien eingesetzt werden. Die Erfindung wird nachfolgend anhand der Zeichnung beispielhaft in schematisierter Form mit weiteren Details erläutert. Es zeigen:
- Figur 1: eine Anlage zum Herstellen eines Außenkörpers mit Innenbeschichtung
- Figur 2: das Detail "D" nach Figur 1
- Figur 3: eine weitere Variante einer Anlage zum Herstellen eines Außenkörpers mit Innenbeschichtung.

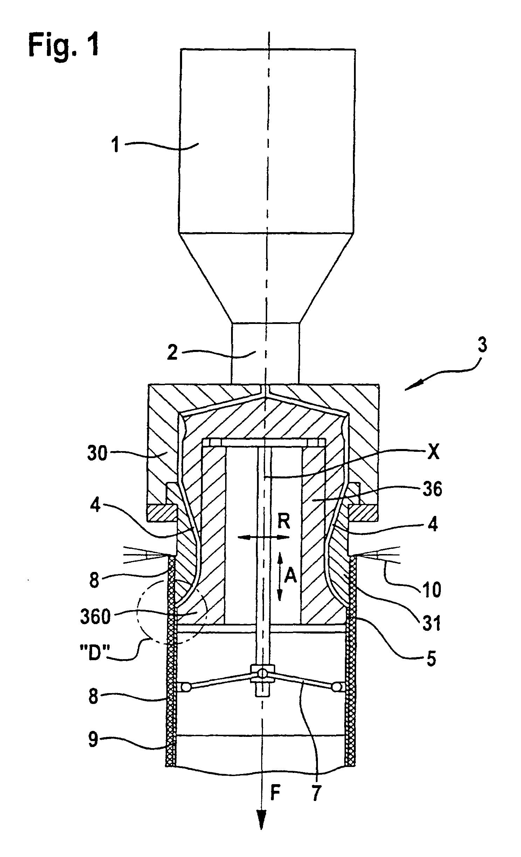

Die Anlage nach Figur 1 dient zum endlosen kontinuierlichen Auftrag einer selbsthaftenden Innenbeschichtung aus schmelzbaren natürlichen oder künstlichen Rohstoffen in einen gleichzeitig herzustellenden rohrförmigen festen oder flexiblen endlosen Außenkörper. Gemäß Figur 1 wird ein flexibler rohrförmiger Außenkörper 8 mittels einer stationär angeordneten Vorrichtung mit Webkopf 10 aus synthetischen Fäden durch Weben kontinuierlich hergestellt und in der axialen Förderrichtung F abgezogen. Für die Herstellung der Innenbeschichtung 9 des rohrförmigen Außenkörpers 8 ist ein Formwerkzeug 3 mit einem Fließkanal 4 vorgesehen, wobei der Fließkanal zwischen einem Innendorn 36 und dem mehrteiligen Formgehäuse 30, 31 ringförmig im Querschnitt betrachtet verlaufend ausgebildet ist. Für die Beschichtungsmasse ist ein Schmelzbehälter 1 vorgesehen, in den geschmolzenes Gut eingetragen werden, der Behälter ist beheizt und gekühlt. Am Boden oder an der Wand des Behälters ist eine Austragsvorrichtung 2 dergestalt angebracht, dass über ein Fördersystem die Schmelze ausgetragen wird, z.B. über eine Förderpumpe und dem Formwerkzeug 3 unter hohem Druck zugeführt wird. Das Formwerkzeug 3 ist zumindest mit seinem vorderen Ende, den radialen Austrittsbereich der Schmelze aus dem Fließkanal einschließend, in das offene Stirnende des parallel gefertigten Außenkörpers 8 eingeführt. Das Formwerkzeug 3 mit Austragsvorrichtung 2 und Behälter 1 ist ebenfalls stationär angeordnet.

Das Austragssystem ist so gestaltet, dass der Masseaustrag eine hochgenaue Eindosierung der ausgetragenen Masse in das im Verfahren folgende Formwerkzeug 3 vornimmt und mittels dieser exakten Dosierung eine Innenbeschichtung 9 auf einen flexiblen oder festen gleichzeitig oder mit geringem zeitlichem Vorlauf im gleichen Arbeitsgang hergestellten rohrförmigen Außenkörper 8 geregelt aufträgt. Das Austragssystem ist beheizt oder beheizt und gekühlt.

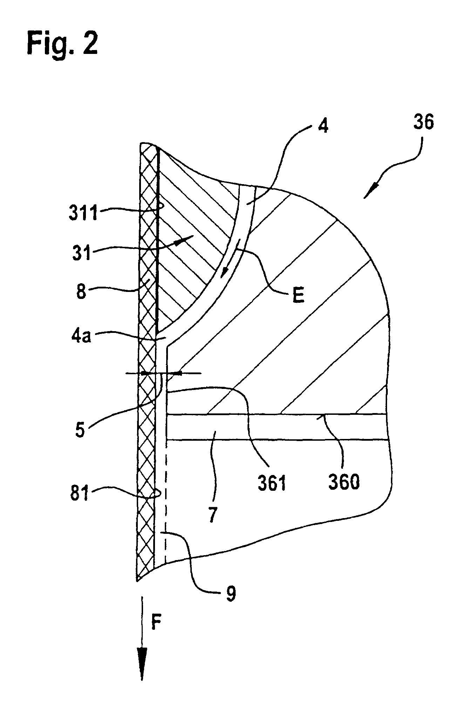

Das Formwerkzeug 3 umfasst einen Innendorn 36 und ein diesen umgebendes mehrteiliges Formgehäuse 30, 31, wobei entlang der Außenkontur des Innendornes ein feststehender Fließkanal 4 im Querschnitt betrachtet ringförmig ausgebildet ist. Der Fließkanal 4 mündet in einem ringförmigen radialen Austragsbereich 4a, siehe Figur 2. Der Innendorn 36 ist pilzförmig gestaltet mit einem Pilzkopf 360 an seinem vorderen Ende, dessen seitliche Außenwandung 361 koaxial zur Längsachse X des Dornes und zur Förderrichtung F verläuft. Das den Fließkanal 4 nach außen begrenzende Formgehäuse in Gestalt der Formdüse 31 ist außenseitig zylindrisch ausgebildet, wobei die Formdüse 31 längs ihrer Außenwandung als Führungselement, Stützelement und Kalibrierelement für den darüber gezogenen Außenkörper 8 dient. Nach dem Weben erhält der Außenkörper beim Überziehen entlang der Formdüse 31 eine Innenkalibrierung, so dass er gespannt ist und durch diese Spannung eine stabile Form erhält. Der Außenkörper verlässt die Führungsfläche 311 der Formdüse an der Stelle, wo der Fließkanal 4 in den radialen ringförmigen Austrittsbereich 4a mündet. Für die aufzutragende Beschichtung wird ein axial sich erstreckender Ringspalt 5, siehe Figur 2, zwischen der zylindrischen Außenwandung 361 des Pilzkopfes 360 des Innendorns 36 und dem daran vorbei geführten Außenkörper 8 gebildet, dessen Spaltweite sich durch den Unterschied der Außendurchmesser der Formdüse 31 an der Außenwandung 311 und dem Außendurchmesser des Pilzkopfes 360 an der Außenwandung 361 ergibt. Der Ringspalt 5 ist kleiner als der Austrittsbereich 4a, das heißt das Ende des Fließkanals 4, so dass die in Pfeilrichtung E ankommende Schmelze, die unter hohem Druck steht, unter entsprechend hohem Druck innerhalb des Ringspaltes 5 radial an die Innenwandung 81 des Außenkörpers beim Durchlaufen des axialen Ringspaltes 5 in Förderrichtung F gedrückt wird und zu einer entsprechend guten Anhaftung der Innenbeschichtung 9 an dem Außenkörper 8 führt. Der Ringspalt 5 wird vom Innendorn und der sich anschließenden Kalibriervorrichtung gebildet und bewirkt zugleich eine Formgebung der Innenbeschichtung, die durch die nachgeschaltete Kalibrierung mittels einer Kalibriervorrichtung 7 ergänzt wird. Der Innendorn 36 mit dem Pilzkopf 360 ist axial verstellbar in Pfeilrichtung A und ebenfalls radial verstellbar in Pfeilrichtung R. Die Kalibriervorrichtung kann auch am Außenumfang ballig ausgeführt sein.

Über eine geeignete mechanische Vorrichtung kann der Innendorn bzw. der Pilzkopf 360 innerhalb des Formgehäuses 3 entlang der Rohrachse X hineingezogen oder herausgeschoben werden, siehe Pfeilrichtung A und damit der Austragsbereich 4a unterschiedlich weit gewählt werden. Diese Spaltweitenregulierung kann manuell aber auch automatisch über geeignete Hub-Druck-Systeme messwertgesteuert erfolgen. Die radiale Verstellbarkeit des Innendornes 36 mit dem Pilzkopf 360, die auch zusammen mit der Formdüse 31 erfolgen kann, ermöglicht eine gleichmäßige Schichtverteilung über den Umfang der Innenbeschichtung 9. Die nachgeordnete Kalibriereinrichtung 7 für die Innenkalibrierung der Innenbeschichtung ist manuell oder automatisch über ein geeignetes Hub-Zug-System im Durchmesser verstellbar und es kann damit auf den Ringspalt manuell oder messwertgesteuert Einfluss genommen werden zur Erzielung einer fest haftenden und maßlich hochgenauen Wanddicke der Innenbeschichtung 9.

Im Vorfeld der Kalibriervorrichtung 7 kann des weiteren eine Kontroll- und Messeinrichtung angeordnet sein zur Kontrolle der hergestellten Innenbeschichtung.

Ein wesentliches Merkmal zum Herstellen einer einstellbaren und maßhaltigen Innenbeschichtung gewünschter Wanddicke ist die Ausbildung des axialen Ringspaltes 5 zwischen dem Pilzkopf 360 des Innendorns und der Innenwandung des Außenkörpers, wobei die durch die Formdüse 31 auf den Außenkörper 8 aufgebrachte Spannung und durch den Abzug in Förderrichtung F ein definierter axialer Ringspalt 5 gebildet wird, in dem sich durch die unter hohem Druck eingebrachte Beschichtungsmasse ein hoher radialer Druck aufbaut, der zu einer einwandfreien Beschichtung und Anhaftung führt.

Die vorstehend beschriebene Anlage ist geeignet zum endlosen kontinuierlichen Auftrag einer selbsthaftenden Innenbeschichtung 9 aus schmelzbaren Rohstoffen in einem gleichzeitig herzustellenden rohrförmigen festen, insbesondere auch flexiblen endlosen Außenkörper. Hierbei kann mit dem Formwerkzeug, welches während der Produktion ohne Materialflussunterbrechung in der Austragsmenge und in der Schichtdicke der herzustellenden Beschichtung einstellbar ist gearbeitet werden und die Einstellung der Schichtdicke der herzustellenden Beschichtung kann über einen vorzugebenden Messwert im Soll-Ist-Vergleich selbsttätig erfolgen.

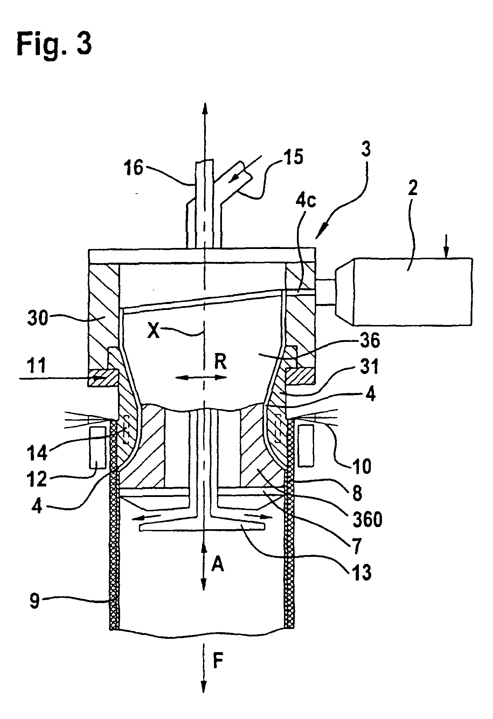

In der Figur 3 ist eine weitere Anlage zum Herstellen eines endlosen rohrförmigen Außenkörpers mit einer Innenbeschichtung aus einer aufgeschmolzenen Beschichtungsmasse dargestellt, bei welcher das Aufschmelzen und Dosieren der Beschichtungsmasse mittels des Extruders 2 erfolgt. Es ist ein fortlaufend gewebter rohrförmiger Außenkörper 8, der mittels des stationär angeordneten Webkopfes 10 aus Fäden gewebt wird, mit der Innenbeschichtung zu versehen. Der gewebte Außenkörper 8 wird fortlaufend von seinem Entstehungsort 10 am Webkopf in Förderrichtung F abgezogen. Dem Extruder 2 ist das Formwerkzeug 3 nachgeordnet, das mit seinem vorderen den ringförmigen Austrittsbereich für die Schmelze umfassenden Ende koaxial in das oben offene stirnseitige Ende des Außenkörpers 8 von seinem Entstehungsbereich her partiell eingetaucht ist. Die Anordnung ist bevorzugt vertikal, so dass das Formwerkzeug 3 oberhalb des Webkopfes 10 koaxial zu diesem ebenfalls stationär angeordnet ist.

In dem Formwerkzeug 3 ist ein im Querschnitt betrachtet ringförmiger Fließkanal 4 ausgebildet zwischen dem Innendorn 36 und dem diesen umgebenden Formgehäuse 30, 31. Die Schmelzezuführung vom Extruder erfolgt über den Einlaufkanal 4c zum Fließkanal 4. Der Innendorn 36 weist bevorzugt eine pilzförmige Gestalt auf, mit einer gegenüber dem vorderen Pilzkopf 360 vorangehenden Einschnürung, die hier einen entsprechenden Fließkanalverlauf 4b bewirkt, wobei wiederum, wie bereits bei der Anlage nach Figur 1 und Figur 2 beschrieben, ein axial sich erstreckender Ringspalt in der Weise ausgebildet ist, dass der Außendurchmesser des zylindrischen Pilzkopfes 360 um die gewünschte Spaltweite kleiner als der Außendurchmesser des Formgehäuses 31, das den Fließkanal 4 im Bereich von dessen Austritt in den Ringspalt begrenzt, kleiner ist. Nach außen wird der so gebildete axiale Ringspalt 5 durch die Außenwandung 81 des an dem Formgehäuse 31 und an dem Pilzkopf 360 beabstandet vorbeigeführten Außenkörpers 8 begrenzt. Der Innendorn 36 ist wiederum mittels einer nicht dargestellten Verstelleinrichtung axial in Pfeilrichtung A verstellbar zur Spaltweitenregulierung und zwecks Verschluss des Austrittsbereiches. Darüber hinaus ist der in das Formgehäuse eingesetzte Innendorn mittels einer Verstelleinrichtung 11, beispielsweise Schrauben, die an dem Formgehäuse 31 angreifen, radial in Pfeilrichtung R verstellbar, wodurch die Schichtverteilung im Ringspalt 5a einstellbar ist.

Im Falle der Beschichtung von gewebten Außenkörpern ist es von Vorteil, zur Verbesserung der Haftung, den gewebten Außenkörper vor dem Beschichten zu erwärmen. Hierzu ist außenseitig nachfolgend dem Webkopf und parallel zur innenseitigen Führung des Außenkörpers 8 mittels des Formgehäuses 31 ein Heizaggregat 12, beispielsweise Infrarotheizung vorgesehen. Des weiteren ist es möglich, auch innerhalb des Formgehäuses 31 zu diesem Führungsbereich des Außenkörpers 8 zugeordnete, hier nicht näher dargestellte, Heizpatronen vorzusehen. Diese außenseitige und innenseitige Erwärmung des Außenkörpers 8 vor dem Beschichtungsauftrag dient zugleich der Trocknung des gewebten Materials. Das Formgehäuse 31 wiederum dient der Innenkalibrierung des Außenkörpers, so dass dieser in der gewünschten Form und Maßhaltigkeit und gespannt dem Ringspalt 5 zugeführt wird. Die Schmelze wird unter einem hohen Druck von 30, vorzugsweise mehr als 68 bar aus dem Extruder in das Formwerkzeug 3, das heißt den Fließkanal 4 eingespeist. Da erfindungsgemäß der Querschnitt des Ringspaltes 5 kleiner gegenüber dem Querschnitt des Austragsbereichs 4a des Fließkanals ausgebildet ist, wird ein hoher radialer Innendruck im Bereich des Ringspaltes erzeugt, wodurch eine gute Anhaftung und lückenlose Beschichtung der Innenwandung des gewebten Außenkörpers erfolgt. Es können auf diese Weise gasdichte gewebte Außenkörper hergestellt werden. Dem Pilzkopf 360 des Innendorns ist unmittelbar im Bereich des Ringspaltes noch eine Kalibrierzone mit einer Kalibriervorrichtung 7 nachgeordnet. Diese Kalibriervorrichtung 7 ist in ihrem Durchmesser verringerbar im Falle eines Not-Stops, so dass ein Festschrumpfen des Außenkörpers mit Innenbeschichtung vermieden wird. Nachfolgend der Beschichtungszone und Kalibrierzone wird die auf den Außenkörper aufgebrachte Innenbeschichtung zumindest von innen, ggf. auch zusätzlich von außen gekühlt. Die Länge der Kühlzone richtet sich nach Bedarf. Bevorzugt erfolgt die Kühlung mittels Kühlluft, welche über eine Leitung 15 durch den Innendorn hindurch zugeführt wird und über ein koaxial innerhalb des Zuführungsrohres geführte Abluftleitung 16 aus dem Inneren wieder abgeführt. Die Verteilung unmittelbar nach der Kalibrierzone kann beispielsweise mittels innenluftdüsen 13 erfolgen, welche verstellbar angeordnet sind.

Die Beschichtungsdicke und der Beschichtungsprozess sind über die axiale und radiale Verstellbarkeit des Innendornes 36 regelbar. Dies kann manuell oder programmgesteuert erfolgen. Als Messgröße wird bevorzugt ein Soll-Ist-Vergleich mit einer vorgegebenen Schichtdicke.

Die erfindungsgemäße Anlage ist gekennzeichnet durch eine dosierbare Austragsvorrichtung 2 für die geschmolzene Beschichtungsmasse für einen endlosen kontinuierlichen Beschichtungsauftrag als Innenbeschichtung 9 für einen rohrförmigen endlosen parallel dazu hergestellten Außenkörper. Der Auftragsvorrichtung ist ein Formwerkzeug 3 mit ringförmigem Austrittsbereich 4a, dem sich ein axial erstreckender Ringspalt anschließt zur Innenbeschichtung des rohrförmigen Außenkörpers 8. Das Formwerkzeug weist einen bereichsweise innerhalb des Außenkörpers geführten axial verstellbaren Innendorn auf und ist mit einer verstellbaren Kalibriervorrichtung für die Innenbeschichtung, die innerhalb des Außenkörpers vorgesehen ist, ausgerüstet. Zusätzlich ist der Innendorn radial verstellbar ausgestattet.

## Patentansprüche

1. Verfahren zum kontinuierlichen Herstellen eines endlosen rohrförmigen steifen oder flexiblen Außenkörpers und Herstellen einer Innenbeschichtung des Außenkörpers mit einer Beschichtungsmasse aus schmelzbaren natürlichen und/oder künstlichen Rohstoffen in geschmolzenem Zustand gleichzeitig oder mit geringem zeitlichem Nachlauf zu dem im gleichen Arbeitsgang hergestellten Außenkörper, wobei die aufgeschmolzene Beschichtungsmasse unter Druck über einen ringförmigen Austrittsspalt auf die Innenwandung des kontinuierlich an dem ringförmigen stationären Austrittsspalt vorbei geförderten Außenkörpers aufgetragen wird und in einem sich anschließenden axial erstreckenden Ringspalt zu der Innenbeschichtung gewünschter Schichtdicke ausgebildet wird, **dadurch gekennzeichnet, dass** die Beschichtungsmasse mit einem Druck von mindestens 30 bar gefördert wird und unter Ausübung eines einstellbaren radialen Druckes auf die Innenwandung des Außenkörpers aufgebracht wird und die aus dem ringförmigen Austrittsspalt austretende Menge der Beschichtungsmasse durch Verändern der Spaltweite des ringförmigen Austrittsspaltes geregelt wird und die Schichtverteilung im Ringspalt zum Erreichen einer konzentrischen Innenbeschichtung mit möglichst gleichmäßiger Wanddicke über den Querschnitt betrachtet eingestellt wird.

2. Verfahren nach Anspruch 1, **dadurch gekennzeichnet, dass** die aufgebrachte Innenbeschichtung dem Ringspalt nachfolgend kalibriert wird.

3. Verfahren nach Anspruch 1 oder 2, **dadurch gekennzeichnet, dass** der Außenkörper nach dem Aufbringen der Innenbeschichtung von außen und/oder innen gekühlt wird.

4. Verfahren nach einem der Ansprüche 1-3, **dadurch gekennzeichnet, dass** der Außenkörper im Bereich vor dem Aufbringen der Innenbeschichtung von außen und/oder innen vorgewärmt wird.

5. Verfahren nach einem der Ansprüche 1-4, **dadurch gekennzeichnet, dass** zur Regelung der Schichtdicke der Innenbeschichtung die Spaltweite des ringförmigen Austrittsspaltes selbsttätig über einen Soll-Ist-Vergleich mit der vorgegebenen Schichtdicke geregelt wird.

6. Verfahren nach einem der Ansprüche 1-5, **dadurch gekennzeichnet, dass** ein hoher radialer Beschichtungsdruck im Bereich des Ringspaltes durch Ausbildung des in den axialen Ringspalt mündenden Querschnittes des das Ende des Fließkanals bildenden Austrittsspaltes mit einem größeren Querschnitt als dem Querschnitt des Ringspaltes infolge des Nachdrückens der mit hohem Druck geförderten geschmolzenen Beschichtungsmasse aufgebaut wird.

7. Verfahren nach einem der Ansprüche 1-6, **dadurch gekennzeichnet, dass** im Falle eines Not-Stops der Fertigung der Durchmesser der Kalibriervorrichtung für die Innenbeschichtung des Außenkörpers manuell oder programmgesteuert verringert wird, so dass sich der abkühlende und dadurch schrumpfende rohrförmige Außenkörper mit Innenbeschichtung nicht festschrumpfen kann.

8. Anlage zum kontinuierlichen Herstellen eines endlosen rohrförmigen steifen oder flexiblen Außenkörpers (8) mit einer Innenbeschichtung (9) aus einer Beschichtungsmasse aus schmelzbaren natürlichen und/oder künstlichen Rohstoffen in geschmolzenem Zustand mit einer stationären Vorrichtung zum Herstellen des Außenkörpers, der eine stationäre Austragsvorrichtung für die geschmolzene Beschichtungsmasse zugeordnet ist, wobei der Austragsvorrichtung (1, 2) ein Formwerkzeug (3) mit einem zwischen einem Innendorn (36) mit Pilzkopf (360) und einem dieses umgebenden mehrteiligen Formgehäuse (30, 31) ausgebildeten, im Querschnitt betrachtet ringförmigen Fließkanal (4) nachgeordnet ist, wobei das Formwerkzeug zumindest teilweise in das stirnseitig offene Ende des kontinuierlich gefertigten und geförderten Außenkörpers (8) am Entstehungsort eintaucht und der Fließkanal mit einem ringförmigen Austrittsspalt (4a) in einen zwischen der Außenwandung (361) des Pilzkopfes (360) des Innendorns (36) und der Innenwandung (81) des Außenkörpers (8) gebildeten sich axial erstreckenden Ringspalt (5) mündet, **dadurch gekennzeichnet, dass** der Innendorn (36) axial und radial verstellbar ist.

9. Anlage nach Anspruch 8, **dadurch gekennzeichnet, dass** der an den Pilzkopf (360) des Innendorns (36) in Fließrichtung rückwärts angrenzende Fließkanal (4) außenseitig von einem eine Formdüse (31) bildenden Teil des Formgehäuses begrenzt ist und die Formdüse (31) mit ihrer Außenwandung (311) als Führungs- und Stützelement und/oder Kalibrierelement zur Innenkalibrierung für den darüber gezogenen Außenkörper (8) dient und die Formdüse (31) radial verstellbar ist.

10. Anlage nach einem der Ansprüche 8 oder 9, **dadurch gekennzeichnet, dass** der Fließkanal (4) im axialen Längsschnitt betrachtet entlang einer radialen Einschnürung und von dieser in Fließrichtung zum Pilzkopf (360) des Innendorns (36) hin trichterförmig nach außen verlaufend ausgebildet ist und in den Ringspalt (5) radial einmündet.

11. Anlage nach einem der Ansprüche 8-10, **dadurch gekennzeichnet, dass** der Ringspalt (5) axial und/oder radial verstellbar ist.

12. Anlage nach einem der Ansprüche 8-11, **dadurch gekennzeichnet, dass** dem Ringspalt (5) bzw. dem Pilzkopf (360) des Innendorns (36) in Fließrichtung vorangehend eine axial und/oder radial verstellbare innerhalb des Außenkörpers (9) angeordnete Kalibriervorrichtung (7) für die Innenbeschichtung (8) zugeordnet ist.

13. Anlage nach einem der Ansprüche 8-12, **dadurch gekennzeichnet, dass** durch das Formwerkzeug bzw. den Innendorn (36) Leitungen (15, 16) für Zuluft und Abluft von Kühlluft in den Innenraum des beschichteten Außenkörpers geführt sind, die zum Kühlen der auf den Außenkörper aufgebrachten Innenbeschichtung dienen.

14. Anlage nach einem der Ansprüche 8-13, **dadurch gekennzeichnet, dass** die Regulierung der Austrittsmenge an Beschichtungsmasse aus dem Ringspalt (5) und der vollständige Verschluss des Ringspaltes mittels des verstellbaren Innendorns (36) und/oder der Kalibriervorrichtung (7) durchführbar ist.

15. Anlage nach einem der Ansprüche 8-14, **dadurch gekennzeichnet, dass** die Kalibriervorrichtung für die Innenbeschichtung im Durchmesser im Stillstand wie auch während der laufenden Produktion einstellbar ist, wodurch die Schichtdicke der aufzutragenden Innenbeschichtung maßhaltig fertigstellbar ist.

16. Anlage nach einem der Ansprüche 8-15, **dadurch gekennzeichnet, dass** die Austragsvorrichtung für die Beschichtungsmasse in der Austragsmenge regulierbar ist und als Austragsvorrichtung ein Extruder (2) vorgesehen ist.

17. Anlage nach einem der Ansprüche 8-16, **dadurch gekennzeichnet, dass** entlang des Bereiches der als Innenführung für den Außenkörper dienenden Formdüse (31) außenseitig Heizaggregate (12) zum Erwärmen des Außenkörpers angeordnet sind.

18. Anlage nach einem der Ansprüche 8-17, **dadurch gekennzeichnet, dass** die Formdüse (31) mit einer innerhalb der Formdüse angeordneten Heizeinrichtung (14) ausgestattet ist.

19. Anlage nach einem der Ansprüche 8-18, **dadurch gekennzeichnet, dass** eine Mess- und Kontrolleinrichtung innerhalb des Außenkörpers nachfolgend der Kalibriereinrichtung angeordnet ist.

20. Anlage nach einem der Ansprüche 8-19, **dadurch gekennzeichnet, dass** eine Regeleinrichtung für die aufzutragende Schichtdicke der Innenbeschichtung mittels eines Soll-ist-Vergleichs der vorgegebenen Schichtdicke der Innenbeschichtung vorgesehen ist.

21. Anlage nach einem der Ansprüche 8-20, **dadurch gekennzeichnet, dass** als stationäre Vorrichtung zum Herstellen eines flexiblen Außenkörpers ein Webkopf (10) für das Weben eines endlosen Schlauches aus textilen und/oder synthetischen Fasern, Fäden, Garnen vorgesehen ist.

## Claims

1. A method for the continuous production of an endless tubular rigid or flexible outer body and the production of an internal coating of the outer body with a coating material comprising meltable natural and/or synthetic raw materials in the melted state simultaneously with or a short time after the outer body which is produced in the same operation, the melted coating material being applied, under pressure and via an annular exit gap, onto the inner wall of the outer body which is conveyed continuously past the annular stationary exit gap, and the said melted coating material being configured to the layer thickness desired for the internal coating in an adjoining axially extending annular slit, **characterized in that** the coating material is conveyed at a pressure of at least 30 bar and is applied to the inner wall of the outer body by the exertion of an adjustable radial pressure, and the amount of coating material emerging from the annular exit gap is regulated by changing the gap width of the annular exit gap and the layer distribution in the annular slit is adjusted to achieve a concentric internal coating with as uniform a wall thickness as possible as seen across the cross section.

2. A method according to claim 1, **characterized in that** the applied internal coating is calibrated downstream of the annular slit.

3. A method according to claim 1 or 2, **characterized in that** the outer body is cooled from the outside and/or inside after the internal coating has been applied.

4. A method according to any one of claims 1 to 3, **characterized in that** the outer body is pre-warmed from the outside and/or inside in the region before the internal coating is applied.

5. A method according to any one of claims 1 to 4, **characterized in that**, in order to regulate the layer thickness of the internal coating, the gap width of the annular exit gap is automatically regulated by means of a setpoint/actual value comparison with the predetermined layer thickness.

6. A method according to any one of claims 1 to 5, **characterized in that** a high radial coating pressure is built up in the region of the annular slit by configuring the cross section, which opens into the axial annular slit, of the exit gap, which forms the end of the flow channel, with a greater cross section than the cross section of the annular slit as a consequence of squeezing by the melted coating material which is conveyed at high pressure.

7. A method according to any one of claims 1 to 6, **characterized in that**, in the event of an emergency production stop, the diameter of the calibrating apparatus for the internal coating of the outer body is reduced manually or in a program-controlled manner, with the result that the tubular outer body, which is cooling off and as a result shrinking, with the internal coating cannot shrink solidly onto it.

8. An installation for the continuous production of an endless tubular rigid or flexible outer body (8) with an internal coating (9) comprising a coating material of meltable natural and/or synthetic raw materials in the melted state, having a stationary apparatus for manufacturing the outer body which is assigned a stationary discharge apparatus for the melted coating material, a moulding tool (3) being arranged behind the discharge apparatus (1, 2), the said moulding tool (3) having a flow channel (4) which is annular as seen in cross section and is formed between an inner mandrel (36) having a mushroom head (360) and a multi-part mould housing (30, 31) which surrounds the latter, the moulding tool dipping, at least partially, into the end-side open end of the continuously manufactured and conveyed outer body (8) at the production site, and the flow channel opening with an annular exit gap (4a) into an axially extending annular slit (5) which is formed between the outer wall (361) of the mushroom head (360) of the inner mandrel (36) and the inner wall (81) of the outer body (8), **characterized in that** the inner mandrel (36) can be displaced axially and radially.

9. An installation according to claim 8, **characterized in that** the flow channel (4), which adjoins the mushroom head (360) of the inner mandrel (36) backwards in the direction of flow, is delimited on the outside by a part of the mould housing which forms a shaping die (31), and the outer wall (311) of the shaping die (31) serves as a guiding and supporting element and/or calibrating element for internal calibration of the outer body (8) which is pulled over it, and the shaping die (31) can be displaced radially.

10. An installation according to either one of claims 8 and 9, **characterized in that**, as seen in axial longitudinal section, the flow channel (4) is configured to extend outwardly in a funnel shape along a radial constriction and from the latter in the direction of flow towards the mushroom head (360) of the inner mandrel (36) and opens out radially into the annular slit (5).

11. An installation according to any one of claims 8 to 10, **characterized in that** the annular slit (5) can be displaced axially and/or radially.

12. An installation according to any one of claims 8 to 11, **characterized in that** the annular slit (5) or the mushroom head (360) of the inner mandrel (36) is assigned upstream in the direction of flow, an axially and/or radially displaceable calibrating apparatus (7), arranged within the outer body (9), for the internal coating (8).

13. An installation according to any one of claims 8 to 12, **characterized in that** lines (15, 16) for the inlet and outlet of cooling air into the interior of the coated outer body are guided through the moulding tool or the inner mandrel (36) and serve to cool the internal coating applied to the outer body.

14. An installation according to any one of claims 8 to 13, **characterized in that** the regulation of the amount of coating material output from the annular slit (5) and the complete closure of the annular slit can be performed by means of the displaceable inner mandrel (36) and/or the calibrating apparatus (7).

15. An installation according to any one of claims 8 to 14, **characterized in that** the diameter of the calibrating apparatus for the internal coating can be adjusted at a standstill and also during continuous production, as a result of which the layer thickness of the internal coating to be applied can be produced in a dimensionally stable manner.

16. An installation according to any one of claims 8 to 15, **characterized in that** the discharge amount of the discharge apparatus for the coating material can be regulated, and an extruder (2) is provided as discharge apparatus.

17. An installation according to any one of claims 8 to 16, **characterized in that** heating units (12) for warming the outer body are arranged on the outside along the region of the shaping die (31) which serves as an inner guide for the outer body.

18. An installation according to any one of claims 8 to 17, **characterized in that** the shaping die (31) is equipped with a heating device (14) which is arranged within the shaping die.

19. An installation according to any one of claims 8 to 18, **characterized in that** a measuring and monitoring device is arranged within the outer body downstream of the calibrating device.

20. An installation according to any one of claims 8 to 19, **characterized in that** a device for regulating the layer thickness of the internal coating to be applied by means of a setpoint/actual value comparison of the predetermined layer thickness of the internal coating is provided.

21. An installation according to any one of claims 8 to 20, **characterized in that** a weaving head (10) for weaving an endless tube comprising textile and/or synthetic fibres, threads and yarns is provided as a stationary apparatus for manufacturing a flexible outer body.

## Revendications

1. Procédé pour la fabrication en continu d'un corps extérieur sans fin tubulaire, rigide ou flexible, et la fabrication d'un revêtement intérieur dudit corps extérieur à l'aide d'une masse de revêtement à base de matières premières fusibles naturelles et/ou synthétiques à l'état fondu, simultanément avec le corps extérieur fabriqué dans la même opération ou avec un faible décalage dans le temps par rapport à celui-ci, la masse de revêtement fondue étant appliquée sous pression, par l'intermédiaire d'une fente de sortie annulaire, sur la paroi interne du corps extérieur transporté en continu devant la fente de sortie annulaire stationnaire et étant façonnée dans un espace annulaire consécutif, qui s'étend dans la direction axiale, pour former le revêtement intérieur de l'épaisseur souhaitée, **caractérisé par le fait que** la masse de revêtement est refoulée sous une pression d'au moins 30 bars et est appliquée sur la paroi interne du corps extérieur en exerçant une pression radiale réglable, que la quantité de masse de revêtement sortant de la fente de sortie annulaire est régulée par modification de la largeur d'ouverture de la fente de sortie annulaire et que la répartition de la couche dans l'espace annulaire est réglée de manière à obtenir un revêtement intérieur concentrique avec une épaisseur de paroi aussi régulière que possible sur la section transversale.

2. Procédé selon la revendication 1, **caractérisé par le fait qu'**à la suite de l'espace annulaire, le revêtement intérieur appliqué est calibré.

3. Procédé selon la revendication 1 ou 2, **caractérisé par le fait que** le corps extérieur est refroidi de l'extérieur et/ou de l'intérieur en aval de l'application du revêtement intérieur.

4. Procédé selon une des revendications 1 à 3, **caractérisé par le fait que** le corps extérieur est réchauffé de l'extérieur et/ou de l'intérieur dans la zone en amont de l'application du revêtement intérieur.

5. Procédé selon une des revendications 1 à 4, **caractérisé par le fait que** pour réguler l'épaisseur de couche du revêtement intérieur, la largeur d'ouverture de la fente de sortie annulaire est réglée de manière automatique à l'aide d'une comparaison consigne-réel avec l'épaisseur de couche prédéterminée.

6. Procédé selon une des revendications 1 à 5, **caractérisé par le fait qu'**une pression de revêtement radiale élevée dans la région de l'espace annulaire est obtenue par l'agencement de la section débouchant dans l'espace annulaire axial de la fente de sortie qui forme l'extrémité du canal d'écoulement avec une section transversale supérieure à la section transversale de l'espace annulaire, du fait de la poussée sur la masse de revêtement fondue transportée avec une pression élevée.

7. Procédé selon une des revendications 1 à 6, **caractérisé par le fait que** dans le cas d'un arrêt d'urgence de la fabrication, le diamètre du dispositif de calibrage pour le revêtement intérieur du corps extérieur est réduit manuellement ou par une commande à programme, afin que le corps extérieur tubulaire avec son revêtement intérieur, qui se refroidit et donc se rétracte, ne puisse pas se bloquer par rétraction.

8. Installation pour la fabrication en continu d'un corps extérieur (8) sans fin tubulaire, rigide ou souple, pourvu d'un revêtement intérieur (9) formé d'une masse de revêtement à base de matières premières fusibles naturelles et/ou synthétiques, à l'état fondu, comportant un dispositif stationnaire pour la fabrication du corps extérieur, auquel est associé un dispositif d'application stationnaire pour la masse de revêtement fondue, un outil de mise en forme (3) avec un canal d'écoulement (4) à section transversale annulaire aménagé entre un mandrin intérieur (36) à tête en forme de champignon (360) et un corps d'outil de mise en forme (30, 31) en plusieurs parties qui entoure ledit mandrin étant disposé à la suite du dispositif d'application (1, 2), l'outil de mise en forme pénétrant au moins partiellement, au point de naissance du corps extérieur, dans l'extrémité ouverte côté frontal du corps extérieur (8) fabriqué et transporté en continu, le canal d'écoulement débouchant par une fente de sortie (4a) annulaire dans un espace annulaire (5), qui s'étend dans la direction axiale et est formé entre la paroi extérieure (361) de la tête en forme de champignon (360) du mandrin intérieur (36) et la paroi intérieure (81) du corps extérieur (8), **caractérisée par le fait que** le mandrin intérieur (36) peut être déplacé axialement et radialement.

9. Installation selon la revendication 8, **caractérisée par le fait que** le canal d'écoulement (4) est contigu à la tête (360) en forme de champignon du mandrin intérieur (36) côté arrière vu dans la direction d'écoulement, est délimité côté extérieur par une partie du corps d'outil de mise en forme formant une filière de mise en forme (31), que la filière de mise en forme (31) avec sa paroi extérieure (311) sert d'élément de guidage et de soutien et/ou d'élément de calibrage pour le calibrage intérieur du corps extérieur (8) extrudé sur celle-ci, et que la filière de mise en forme (31) peut être déplacée radialement.

10. Installation selon une des revendications 8 ou 9, **caractérisée par le fait que** le canal d'écoulement (4), vu en coupe longitudinale axiale s'étend le long d'un rétrécissement radial, à partir de là s'évase en entonnoir vers l'extérieur dans la direction d'écoulement vers la tête en forme de champignon (360) du mandrin intérieur (36) et débouche radialement dans l'espace annulaire (5).

11. Installation selon une des revendications 8 - 10, **caractérisée par le fait que** l'espace annulaire (5) est réglable dans la direction axiale et/ou la direction radiale.

12. Installation selon une des revendications 8 - 11, **caractérisée par le fait qu'**à l'espace annulaire (5) ou à la tête en forme de champignon (360) du mandrin intérieur (360), en tête vu dans la direction d'écoulement, est associé un dispositif de calibrage (7) du revêtement intérieur (8), qui est disposé à l'intérieur du corps extérieur (9) avec possibilité de réglage dans la direction axiale et/ou la direction radiale.

13. Installation selon une des revendications 8 - 12, **caractérisée par le fait que** des conduites (15, 16) pour l'amenée et l'évacuation d'air de refroidissement à l'intérieur du corps extérieur revêtu traversent l'outil de mise en forme ou le mandrin intérieur (36) et servent au refroidissement du revêtement intérieur appliqué sur le corps extérieur.

14. Installation selon une des revendications 8 - 13, **caractérisée par le fait que** la régulation de la quantité de masse de revêtement sortant de l'espace annulaire (5) ainsi que la fermeture complète de l'espace annulaire (5) peut être opérée à l'aide du mandrin intérieur (36) déplaçable et/ou du dispositif de calibrage (7).

15. Installation selon une des revendications 8 - 14, **caractérisée par le fait que** le dispositif de calibrage du revêtement intérieur est réglable en diamètre,à l'arrêt comme en cours de production, ce qui permet de régler à la cote exacte l'épaisseur de couche du revêtement intérieur à appliquer.

16. Installation selon une des revendications 8 - 15, **caractérisée par le fait que** le dispositif d'application du revêtement intérieur est régulé au niveau de la quantité de masse de revêtement appliquée et qu'il est prévu une extrudeuse (2) comme dispositif d'application.

17. Installation selon une des revendications 8 - 16, **caractérisée par le fait que** des moyens de chauffage (12) sont disposés extérieurement le long de la partie de la filière de mise en forme (31) servant de moyen de guidage intérieur pour le corps extérieur, aux fins de réchauffer le corps extérieur.

18. Installation selon une des revendications 8 - 17, **caractérisée par le fait que** la filière de mise en forme (31) est équipée d'un dispositif de chauffage (14) disposé à l'intérieur de la filière de mise en forme.

19. Installation selon une des revendications 8 - 18, **caractérisée par le fait qu'**un dispositif de mesure et de contrôle est disposé à l'intérieur du corps extérieur à la suite du dispositif de calibrage.

20. Installation selon une des revendications 8 - 19, **caractérisée par le fait qu'**il est prévu un dispositif de régulation pour l'épaisseur de couche du revêtement à appliquer au moyen d'une comparaison consigne-réel avec l'épaisseur de couche prédéterminée du revêtement intérieur.

21. Installation selon une des revendications 8 - 20, **caractérisée par le fait qu'**il est prévu comme dispositif stationnaire pour la fabrication d'un corps extérieur flexible une tête de tissage (10) pour le tissage d'un tube souple sans fin à partir de fibres, de fils ou de filés textiles et/ou synthétiques.
